# EUROPEAN PATENT APPLICATION

(11) **EP 4 756 998 A1**
(43) Date of publication of application: **10.06.2026**
(21) Application number: 25841342.6
(22) Date of filing: 08.07.2025
(51) Int. Cl.: H01M 10/617, H01M 10/625, H01M 10/659, B60L 50/64, B60K 1/04

(54) **VEHICLE COMPRISING BATTERY PACK**

(30) Priority: 16.07.2024 KR 20240093384
(71) Applicant: LG Energy Solution, Ltd., Seoul 07335 (KR)
(72) Inventor: KIM, Jin Hyuk, Daejeon 34122 (KR); LEE, Jae Hyun, Daejeon 34122 (KR)
(74) Representative: BCKIP Part mbB
(86) International application number: PCT/KR2025/009853
(87) International publication number: WO 2026/019140

(57) **Abstract**

According to exemplary embodiments of the present invention, a vehicle is provided. The vehicle comprises: a battery pack including a plurality of battery cell assemblies; a temperature controller disposed on the outside of the battery pack; and a chassis accommodating the battery pack and the temperature controller, wherein the temperature controller may include a phase change material.

## Description

### [Technical Field]

The present disclosure relates to a vehicle. More specifically, it relates to a vehicle including a battery pack.

This application claims the benefit of Korean Patent Application No. 10-2024-0093384, filed on July 16, 2024, the disclosure of which is incorporated herein by reference.

### [Background]

Unlike primary batteries, secondary batteries can be charged and discharged a plurality of times. Secondary batteries are widely used as energy sources for various wireless devices such as handsets, laptops, and cordless vacuum cleaners. Recently, due to improvements in energy density and economies of scale, the manufacturing cost per unit capacity of secondary batteries has decreased dramatically. As the cruising range of battery electric vehicles (BEVs) has increased to levels comparable to fuel vehicles, the primary application of secondary batteries is shifting from mobile devices to mobility.

The trend in technological development for secondary batteries in mobility applications is focused on improving energy density and safety. The safety of secondary batteries for mobility is critically important as it directly impacts passenger lives. Secondary battery safety can be achieved through mechanical robustness, reliable electrical insulation, and delaying heat transfer during thermal runaway events.

### [Summary]

### [Technical Problem]

The technical problem addressed by the technical concept of the present disclosure is to provide a vehicle with enhanced safety.

The technical problem addressed by the technical concept of the present disclosure is to provide a vehicle with improved performance and reliability.

The technical problem addressed by the technical concept of the present disclosure is to provide a vehicle with enhanced convenience.

### [Technical Solution]

According to exemplary embodiments of the present disclosure for solving the aforementioned problems, a vehicle is provided. The vehicle includes: a battery pack including a plurality of battery cell assemblies; a temperature controller disposed outside the battery pack; and a chassis accommodating the battery pack and the temperature controller, wherein the temperature controller may include a phase change material.

The temperature controller may be negative feedback-based.

The temperature controller may absorb heat when the temperature of the battery pack exceeds a reference temperature.

When the temperature of the battery pack is below the reference temperature, the temperature controller may release heat.

The battery pack includes a pack housing accommodating the plurality of battery cell assemblies, and the temperature controller may be attached to one surface of the outer wall of the pack housing.

Each of the plurality of battery cell assemblies includes a plurality of battery cells, and the temperature controller may be spaced apart from the plurality of battery cells by the pack housing.

The battery pack includes a pack housing accommodating the plurality of battery cell assemblies, wherein the temperature controller is a pad on an outer wall of the pack housing, wherein the pad may include a pad case and a phase change material packaged within the pad case.

The pad case may include one selected from the group consisting of silicone, polyurethane, polypropylene, metal, and stainless steel.

The temperature controller includes a coating layer applied to either the battery pack or the chassis, wherein the coating layer may include a capsule containing the phase change material and a binder mixed with the capsule.

The temperature controller may include a polymer film sealing the phase change material.

The temperature controller may include a thermal conductive compound layer and a phase change material dispersed within the thermal conductive compound layer.

### [Advantageous Effects]

According to exemplary embodiments of the present disclosure, a vehicle may include a temperature controller disposed outside the battery pack, thereby enabling management of the temperature of the battery pack by absorbing or releasing heat.

According to exemplary embodiments of the present disclosure, a vehicle with enhanced safety can be provided.

According to exemplary embodiments of the present disclosure, a vehicle with improved performance and reliability can be provided.

According to embodiments based on the technical concept of the present disclosure, a vehicle with enhanced convenience can be provided.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a drawing showing a vehicle including a battery pack according to exemplary embodiments based on the technical concept of the present disclosure.
FIG. 2 is a drawing showing a partial configuration of a vehicle including a battery pack according to exemplary embodiments based on the technical concept of the present disclosure.
FIG. 3 is a drawing showing a partial configuration of a vehicle including a battery pack according to exemplary embodiments based on the technical concept of the present disclosure.
FIG. 4 is a drawing showing heat transfer within a vehicle including a battery pack according to exemplary embodiments based on the technical concept of the present disclosure.
FIG. 5 is a drawing showing heat transfer within a vehicle including a battery pack according to exemplary embodiments based on the technical concept of the present disclosure.
FIG. 6 is an enlarged cross-sectional view showing a partial configuration of a vehicle including a battery pack according to exemplary embodiments based on the technical concept of the present disclosure.
FIG. 7 is an enlarged cross-sectional view showing a partial configuration of a vehicle including a battery pack according to exemplary embodiments based on the technical concept of the present disclosure.
FIG. 8 is an enlarged cross-sectional view showing a partial configuration of a vehicle including a battery pack according to exemplary embodiments based on the technical concept of the present disclosure.
FIG. 9 is an enlarged cross-sectional view showing a partial configuration of a vehicle including a battery pack according to exemplary embodiments based on the technical concept of the present disclosure.
FIG. 10 is an enlarged cross-sectional view showing a partial configuration of a vehicle including a battery pack according to exemplary embodiments based on the technical concept of the present disclosure.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

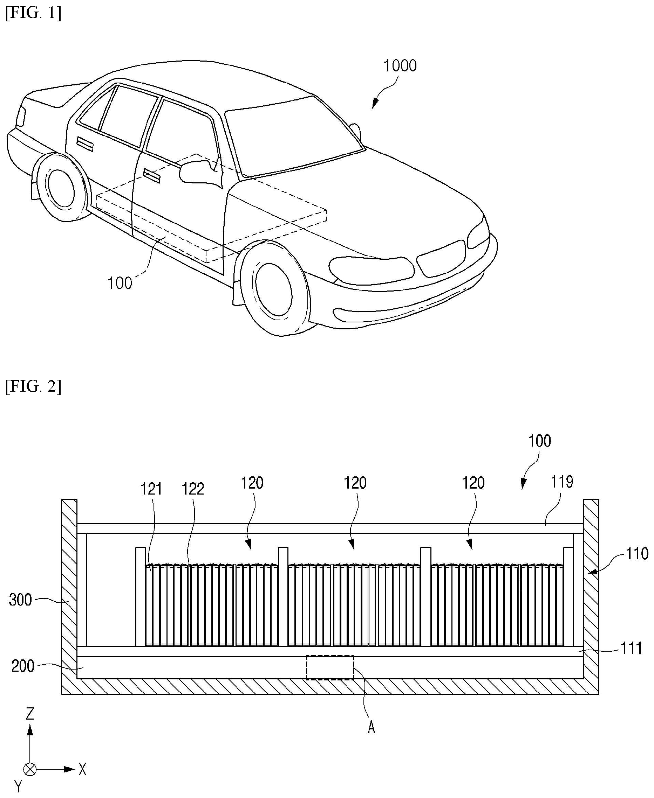

FIG. 1 is a drawing showing a vehicle 1000 including a battery pack 100 according to exemplary embodiments based on the technical concept of the present disclosure.

Referring to FIG. 1, the vehicle 1000 may be, for example, an electric vehicle, a hybrid vehicle, or a plug-in hybrid vehicle, and may include a battery pack 100 according to an embodiment of the present disclosure. The vehicle 1000 may include four-wheeled vehicles and two-wheeled vehicles. The vehicle 1000 may operate by receiving power supplied from the battery pack 100 according to an embodiment of the present disclosure. Hereinafter, the battery pack 100 will be described with reference to FIGS. 2 through 5.

FIG. 2 is a drawing showing a partial configuration of a vehicle including a battery pack 100 according to exemplary embodiments based on the technical concept of the present disclosure. Specifically, FIG. 2 is a cross-sectional view showing the battery pack 100, a temperature controller 200, and a chassis 300.

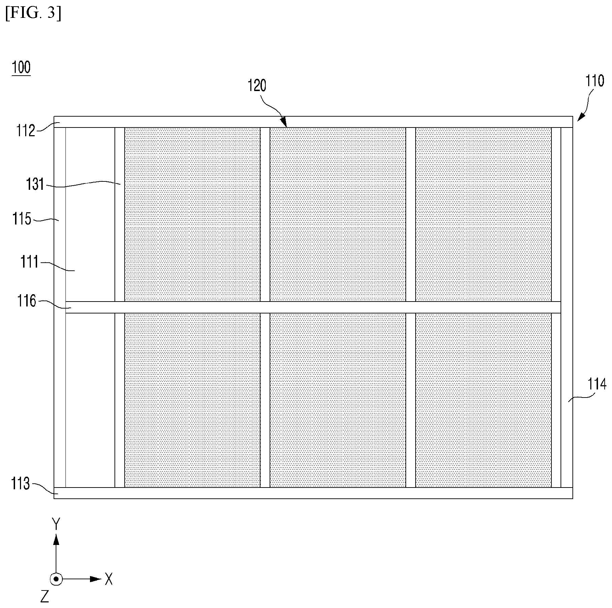

FIG. 3 is a drawing showing a partial configuration of a vehicle including a battery pack 100 according to exemplary embodiments based on the technical concept of the present disclosure. Specifically, FIG. 3 is a plan view of the battery pack 100.

Referring to FIGS. 2 and 3, the vehicle may include a battery pack 100, a temperature controller 200, and a chassis 300.

The battery pack 100 may include a pack housing 110 and a plurality of battery cell assemblies 120. The battery pack 100 may be a final product mounted in an application such as a vehicle.

The pack housing 110 may provide space for the battery cell assemblies 120 to be mounted. The pack housing 110 may include a base plate 111, side walls 112, 113, 114, 115, a center beam 116, and cross beams 117.

Here, a first direction (X-direction) and a second direction (Y-direction) may be substantially parallel to the mounting surface of the base plate 111 (i.e., the surface facing the battery cell assemblies 120), and a third direction (Z-direction) may be substantially perpendicular to the mounting surface of the base plate 111.

The base plate 111 and each of the side walls 112, 113 may be provided by an extrusion process. The extrusion direction for each of the base plate 111 and side walls 112, 113 may be the first direction (X-direction). The side walls 114, 115 may also be provided by an extrusion process. The side walls 112, 113, 114, 115 may be substantially perpendicular to the base plate 111.

According to exemplary embodiments, the base plate 111 and side walls 112, 113 may be coupled by friction stir welding. The base plate 111 may include a plurality of unit plates coupled by friction stir welding.

The center beam 116 may extend in a first direction (X-direction). The center beam 116 may be interposed between the side walls 112, 113. The center beam 116 may be included in a center plate, which is one of the plurality of unit plates frictionally stir welded together. Accordingly, the center beam 116 may be formed together with the center plate, and the center beam 116 may be a continuous element integral with the center plate.

Cross beams 117 may extend in a second direction (Y-direction). Cross beams 117 may be interposed between side walls 114, 115.

The base plate 111 may include a plurality of cooling channels. The plurality of cooling channels may provide passages for the movement of a coolant, such as water. The plurality of cooling channels may be formed by an extrusion process. The plurality of cooling channels may extend in a first direction (X-direction). The plurality of cooling channels may be spaced apart in a second direction (Y-direction).

A plurality of battery cell assemblies 120 may be disposed on the base plate 111 of the pack housing 110. The base plate 111 may support the plurality of battery cell assemblies 120. Side walls 112, 113, 114, 115 may horizontally surround the plurality of battery cell assemblies 120. The side walls 112, 113, 114, 115 may protect the plurality of battery cell assemblies 120. The plurality of battery cell assemblies 120 may be disposed on the base plate 111 within a space defined by cross beams 117.

The battery cell assembly 120 may further include a plurality of battery cells 121 disposed in a first direction (X-direction) and a pad 122 disposed between the plurality of battery cells 121. The pads 122 are disposed between the plurality of battery cells 121 in the first direction (X-direction) and may overlap the plurality of battery cells 121 in the first direction (X-direction). For example, the pads 122 may be parallel to the plurality of battery cells 121.

The pad 122 can absorb swelling of the plurality of battery cells 121. The pad 122 may include an elastic material. The pad 122 may include PU (Polyurethane). The pad 122 may also include a fire-resistant material.

The battery pack 100 may further include pack leads 119 coupled to side walls 112, 113, 114, 115 of the pack housing 110. The pack lead 119 may cover elements mounted inside the battery pack 100, such as a plurality of battery cell assemblies 120 and electrical components. The pack lead 119 may be fixed to the pack housing 110 by mechanical coupling means, such as bolting.

The arrangement of the plurality of battery cell assemblies 120 in FIG. 3 can be described as a 3 * 2 configuration. The arrangement of the plurality of battery cell assemblies 120 disclosed in FIG. 3 is a non-limiting example and does not in any way limit the technical concept of the present disclosure. A person skilled in the art will readily arrive at a plurality of battery cell assemblies 120 arranged in an M * N configuration (where M and N are integers of 2 or greater) based on the description herein.

The battery pack 100 may further include a Battery Management System (BMS). The BMS may be configured to perform monitoring, balancing, and control of the battery pack 100. Monitoring of the battery pack 100 may include measuring the voltage and current at specific nodes within the plurality of battery cell assemblies 120 and measuring the temperature at predetermined locations within the battery pack 100. The battery pack 100 may include instrumentation for measuring the aforementioned voltage, current, and temperature.

Balancing of the battery pack 100 is an operation that reduces deviations between the plurality of battery cell assemblies 120. Control of the battery pack 100 includes preventing the occurrence of overcharging, over-discharging, and overcurrent. Through monitoring, balancing, and control, the battery pack 100 can operate under optimal conditions, thereby preventing the shortened lifespan of each of the plurality of battery cell assemblies 120.

The battery pack 100 may further include additional electrical components such as a cooling device, a PRA (Power Relay Assembly), and a safety plug. The cooling device may include a cooling fan. The cooling fan can prevent overheating of each of the plurality of battery cell assemblies 120 by circulating air within the battery pack 100. The PRA can be configured to supply or interrupt power from the high-voltage battery to an external load (e.g., a vehicle motor). The PRA can protect the plurality of battery cell assemblies 120 and the external load (e.g., a vehicle motor) by disconnecting the power supply to the external load (e.g., a vehicle motor) in situations where abnormal voltages, such as voltage surges, occur. Additional electrical components may be interposed between the plurality of battery cell assemblies 120 and the side wall 115. The space between the battery cell assemblies 120 and the side wall 115 may also be referred to as the electrical component mounting area.

The battery pack 100 may further include a plurality of inter-busbars configured to electrically connect the plurality of battery cell assemblies 120. The plurality of battery cell assemblies 120 may be connected in series by the plurality of inter-busbars. Accordingly, the battery pack 100 may be configured to output a high voltage to an external load (e.g., a vehicle motor).

A temperature controller 200 may be disposed outside the battery pack 100. For example, the temperature controller 200 may be disposed below the battery pack 100. The temperature controller 200 may be disposed beneath the base plate 111. Unlike what is shown, the temperature controller 200 may be disposed above the battery pack 100. The temperature controller 200 may be disposed adjacent to the battery cell assembly 120. The temperature controller 200 may be disposed between the battery pack 100 and the chassis 300. The temperature controller 200 may be disposed between the base plate 111 and the chassis 300.

The temperature controller 200 may be in contact with the battery pack 100. The temperature controller 200 may contact the base plate 111 of the battery pack 100. The temperature controller 200 may be attached to one surface of the pack housing 110. For example, the temperature controller 200 may be attached to one surface of the base plate 111.

The temperature controller 200 may be spaced apart from the battery cell assembly 120 with the pack housing 110 interposed therebetween. The temperature controller 200 may be spaced apart from the battery cell assembly 120 with the base plate 111 interposed therebetween. The temperature controller 200 may be spaced apart from the battery cell 121 with the base plate 111 interposed therebetween. The temperature controller 200 may be adjacent to the chassis 300.

The temperature controller 200 may include a phase change material (PCM). A phase change material may refer to a material that changes phase while absorbing or releasing heat. For example, the phase change material may change phase by absorbing heat. For example, the phase change material may change phase by releasing heat.

The chassis 300 can accommodate the battery pack 100 and the temperature controller 200. The form of the chassis 300 is not limited to what is illustrated. The chassis 300 may refer to a structure that supports and connects the main components of the vehicle 1000 shown in FIG. 1. The chassis 300 may include the external frame of the vehicle 1000 shown in FIG. 1.

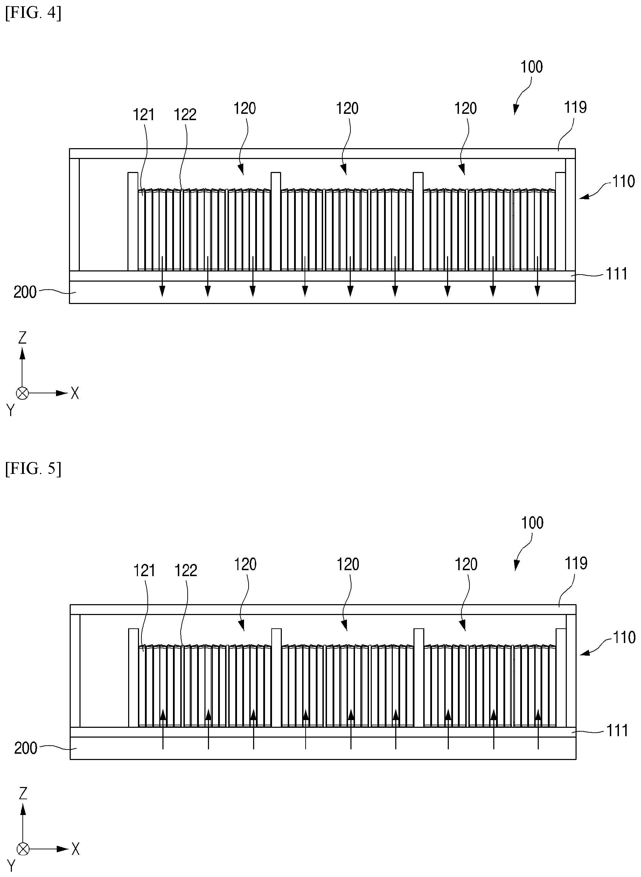

FIG. 4 is a drawing illustrating heat transfer within a vehicle including a battery pack 100 according to exemplary embodiments based on the technical concept of the present disclosure. Specifically, FIG. 4 is a drawing illustrating heat transfer between a battery cell assembly 120 and a temperature controller 200.

FIG. 5 is a drawing illustrating heat transfer within a vehicle including a battery pack 100 according to exemplary embodiments based on the technical concept of the present disclosure. Specifically, FIG. 5 is a drawing illustrating heat transfer between a battery cell assembly 120 and a temperature controller 200.

The temperature controller 200 may be negative feedback-based. Specifically, the temperature controller 200 may act to decrease the temperature of the battery pack 100 when its temperature rises. Conversely, the temperature controller 200 may act to increase the temperature of the battery pack 100 when its temperature decreases. For example, heat may transfer between the battery cell assembly 120 and the temperature controller 200 within the vehicle.

Referring to FIG. 4, when the battery cell assembly 120 releases heat, the temperature controller 200 can absorb the heat. For example, when the battery cell assembly 120 releases heat, the heat can be transferred to the temperature controller 200 disposed adjacent to it. As described above, the temperature controller 200 may include a phase change material, and the phase change material can absorb heat and undergo a phase change. For example, it may change phase from solid to liquid or gas, or from liquid to gas. This can cause the temperature inside the battery pack 100 to decrease.

For example, if the temperature of the battery pack 100 exceeds a reference temperature, the temperature controller 200 can absorb heat. For example, the temperature controller 200 can absorb heat generated from the battery cell 121, thereby lowering the temperature of the battery pack 100. The reference temperature may be a preset value for the stability of the battery pack 100. Alternatively, the reference temperature may not be a specific value but may represent the initial temperature of the battery pack 100.

Specifically, when a thermal runaway event occurs in a battery cell 121, heat may be transferred to adjacent battery cells 121. The temperature controller 200 can absorb this heat, thereby delaying the heat transfer.

Referring to FIG. 5, the temperature controller 200 can release heat and transfer it to the battery cell assembly 120. As described above, the temperature controller 200 may include a phase change material, and the phase change material can release heat and change phase. For example, it can change phase from gas to liquid or solid, or from liquid to solid. This can cause the temperature of the battery pack 100 to rise.

For example, if the temperature of the battery pack 100 is below a reference temperature, the temperature controller 200 can release heat. For example, the temperature controller 200 can release heat to raise the temperature of the battery pack 100.

The vehicle 1000 described with reference to FIGS. 1 through 5 may include a temperature controller 200 including a phase change material, positioned outside the battery pack 100. This allows the temperature of the battery pack 100 to be managed by absorbing or releasing heat through phase change.

Furthermore, since the temperature controller 200 is disposed outside the battery pack 100, interference with components such as the battery cells 121 disposed within the battery pack 100 need not be considered. This enhances the convenience and freedom of the placement location for the temperature controller 200.

According to embodiments based on the technical concept of the present disclosure, a vehicle 1000 including a battery pack 100 with enhanced safety can be provided.

According to embodiments based on the technical concept of the present disclosure, a vehicle 1000 including a battery pack 100 with improved performance and reliability can be provided.

According to embodiments based on the technical concept of the present disclosure, a vehicle 1000 including a battery pack 100 with enhanced convenience can be provided.

### (Second embodiment)

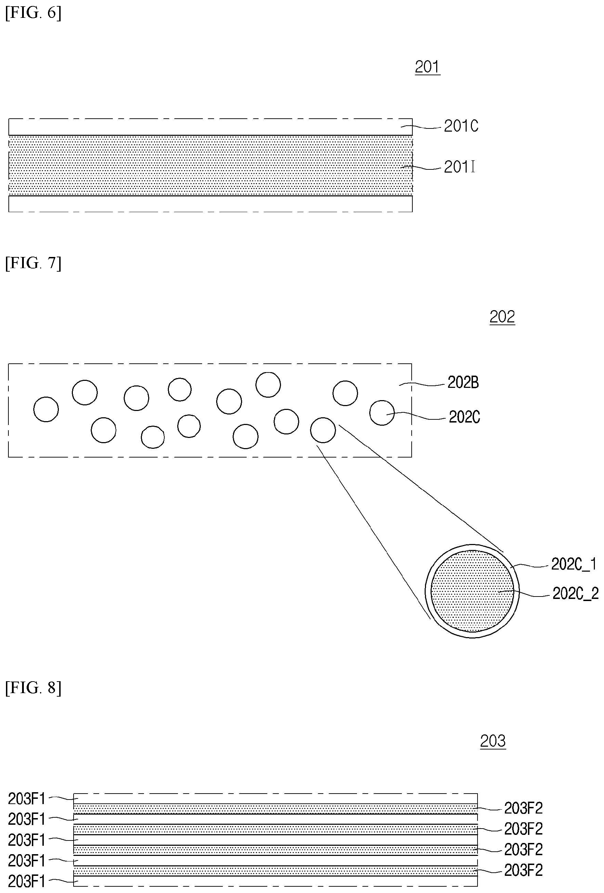

FIG. 6 is an enlarged cross-sectional view showing a partial configuration of a vehicle including a battery pack according to exemplary embodiments based on the technical concept of the present disclosure. Specifically, FIG. 6 is an enlarged cross-sectional view corresponding to region A in FIG. 2, showing a temperature controller 201 external to the battery pack 100.

Referring to FIGS. 2 and 6, the vehicle 1000 may include a temperature controller 201 disposed outside the battery pack 100.

In some embodiments, the temperature controller 201 may be a pad disposed outside the battery pack 100. Specifically, the temperature controller 201 may be a pad on the outer wall of the pack housing 110 of the battery pack 100. For example, the temperature controller 201 may be a pad beneath the base plate 111 of the battery pack 100. The temperature controller 201 may include a pad case 201C and a phase change material 2011. The phase change material 201I may be packaged by the pad case 201C. The phase change material 201I may be enclosed by the pad case 201C so as not to leak outside the pad case 201C. Specifically, even if the phase of the phase change material 201I changes by absorbing or releasing heat, it may not leak outside the pad case 201C.

For example, the pad case 201C may include one selected from silicon, polyurethane, polypropylene, metal, and stainless steel.

### (Third embodiment)

FIG. 7 is an enlarged cross-sectional view showing a partial configuration of a vehicle including a battery pack according to exemplary embodiments based on the technical concept of the present disclosure. Specifically, FIG. 7 is an enlarged cross-sectional view corresponding to region A in FIG. 2, showing a temperature controller 202 external to the battery pack 100.

Referring to FIGS. 2 and 7, the vehicle 1000 may include a temperature controller 202 disposed outside the battery pack 100.

In some embodiments, the temperature controller 202 may be a coating layer. Specifically, the temperature controller 202 may be a coating layer applied onto the battery pack 100. For example, the temperature controller 202 may be a coating layer applied onto an outer wall of the pack housing 110 of the battery pack 100. Specifically, the temperature controller 202 may be a coating layer applied to the chassis 300. For example, the temperature controller 202 may be a coating layer applied to the inner wall of the chassis 300.

Specifically, the temperature controller 202 may include a capsule 202C containing a phase change material and a binder 202B mixed with the capsule 202C. The capsule 202C may include a polymer shell 202C_1 and a phase change material 202C_2. The capsule 202C may be spherical, for example, and comprise an internal phase change material 202C_2 and a polymer shell 202C_1 surrounding it. The capsule 202C may be mixed with a binder 202B and applied to the area to be coated, and the mixture may be dried to form a coating layer. For example, a mixture of the capsule 202C and binder 202B may be applied onto an outer wall of a pack housing 110 of a battery pack 100, which may be dried to form a temperature controller 202. For example, a mixture of capsule 202C and binder 202B may be applied to an inner wall of a chassis 300, which may be dried to form a temperature controller 202.

The phase change material 202C_2 may be encapsulated by the polymer shell 202C_1 and may not leak outside the capsule 202C. Specifically, even if the phase of the phase change material 202C_2 changes by absorbing or releasing heat, it may not leak outside the capsule 202C.

The capsule 202C may have fixing force and/or adhesive force provided by the binder 202B. For example, the capsule 202C containing the phase change material 202C_2 may be adhered or fixed to the outer wall of the pack housing 110 or to the inner wall of the chassis 300 by the binder 202B.

### (Fourth embodiment)

FIG. 8 is an enlarged cross-sectional view showing a partial configuration of a vehicle including a battery pack according to exemplary embodiments based on the technical concept of the present disclosure. Specifically, FIG. 8 is an enlarged cross-sectional view corresponding to region A in FIG. 2, showing a temperature controller 203 external to the battery pack 100.

Referring to FIGS. 2 and 8, the vehicle 1000 may include a temperature controller 203 disposed outside the battery pack 100.

In some embodiments, the temperature controller 203 may include a laminated form of a plurality of polymer films. Specifically, the temperature controller 203 may include a plurality of first films 203F1 and second films 203F2 alternately laminated. The first film 203F1 is a polymer film andtemperature controller may be formed a by alternately laminating second film 203F2 including a phase change material. The first film 203F1 may not include a phase change material. In other embodiments, the first film 203F1 may include a phase change material. The second film 203F2 may be sealed to prevent leakage of the phase change material.

### (Fifth embodiment)

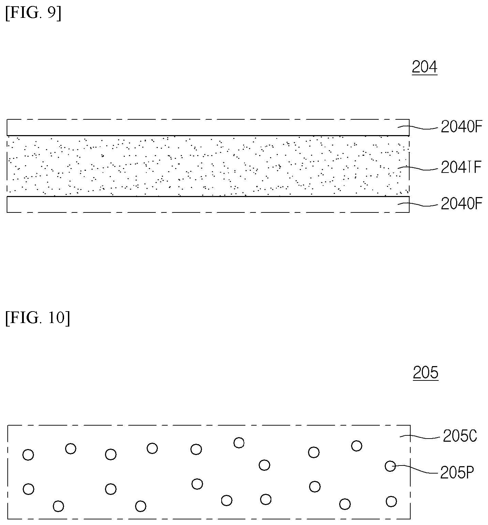

FIG. 9 is an enlarged cross-sectional view showing a partial configuration of a vehicle including a battery pack according to exemplary embodiments based on the technical concept of the present disclosure. Specifically, FIG. 9 is an enlarged cross-sectional view corresponding to region A in FIG. 2, showing a temperature controller 204 external to the battery pack 100.

Referring to FIGS. 2 and 9, the vehicle 1000 may include a temperature controller 204 disposed outside the battery pack 100.

In some embodiments, the temperature controller 204 may include an outer layer 204OF and an inner layer 204IF in the form of a polymer film. Specifically, the inner layer 204IF may be formed to include a phase change material. For example, the inner layer 204IF may be a polymer film including a phase change material. The outer layer 204OF does not contain a phase change material and may serve as a layer for laminating the inner layer 204IF. The outer layer 204OF may laminate the phase change material between them, thereby preventing leakage of the phase change material.

### (Sixth embodiment)

FIG. 10 is an enlarged cross-sectional view showing a partial configuration of a vehicle including a battery pack according to exemplary embodiments based on the technical concept of the present disclosure. Specifically, FIG. 10 is an enlarged cross-sectional view corresponding to region A in FIG. 2, showing a temperature controller 205 external to the battery pack 100.

Referring to FIGS. 2 and 10, the vehicle 1000 may include a temperature controller 205 disposed outside the battery pack 100.

In some embodiments, the temperature controller 205 may include a compound layer 205C and a phase change material 205P dispersed within the compound layer 205C. For example, the compound layer 205C may include a high-viscosity grease or paste. The phase change material 205P may include a capsule form.

Specifically, the compound layer 205C containing dispersed phase change material 205P may be applied outside the battery pack 100 to form a temperature controller 205. The phase change material 205P may not leak due to the compound layer 205C. Specifically, even if the phase of the phase change material 205P changes by absorbing or releasing heat, the phase change material 205P may not leak.

The present disclosure has been described in more detail above through the drawings and embodiments. However, the configurations described in the drawings or embodiments described herein are merely one embodiment of the present disclosure and do not represent all of the technical concepts of the present disclosure. Therefore, it should be understood that various equivalents and modifications may exist at the time of filing this application.

## Claims

1. A vehicle comprising:
a battery pack comprising a plurality of battery cell assemblies;
a temperature controller disposed outside the battery pack; and
a chassis accommodating the battery pack and the temperature controller, wherein
the temperature controller comprises a phase change material.

2. The vehicle of claim 1, wherein
the temperature controller is negative feedback-based.

3. The vehicle of claim 2, wherein
the temperature controller absorbs heat when the temperature of the battery pack exceeds a reference temperature.

4. The vehicle of claim 2, wherein
when the temperature of the battery pack is below a reference temperature, the temperature controller releases heat.

5. The vehicle of claim 1, wherein
the battery pack comprises a pack housing accommodating the plurality of battery cell assemblies, and
the temperature controller is attached to one surface of an outer wall of the pack housing.

6. The vehicle of claim 5, wherein
each of the plurality of battery cell assemblies comprises a plurality of battery cells, and
the temperature controller is spaced apart from the plurality of battery cells with the pack housing interposed therebetween.

7. The vehicle of claim 1, wherein
the battery pack comprises a pack housing accommodating the plurality of battery cell assemblies, wherein
the temperature controller is a pad on an outer wall of the pack housing, wherein
the pad comprises a pad case and a phase change material packaged by the pad case.

8. The vehicle of claim 7, wherein
the pad case comprises one selected from silicone, polyurethane, polypropylene, metal, and stainless steel.

9. The vehicle of claim 1, wherein
the temperature controller comprises a coating layer applied to either the battery pack or the chassis, wherein
the coating layer comprises a capsule containing the phase change material and a binder mixed with the capsule.

10. The vehicle of claim 1, wherein
the temperature controller comprises a polymer film sealing the phase change material.

11. The vehicle of claim 1, wherein
the temperature controller comprises a thermal conductive compound layer and a phase change material dispersed within the thermal conductive compound layer.
